# EUROPÄISCHE PATENTANMELDUNG

(11) **EP 2 226 165 A1**
(43) Veröffentlichungstag der Anmeldung: **08.09.2010**
(21) Anmeldenummer: 09154121.9
(22) Anmeldetag: 02.03.2009
(51) Int. Cl.: B26B 11/00, B26B 17/00, A01G 3/02

(54) **Kombinationswerkzeug**

(71) Anmelder: Alber, Alfons, 39010 Vöran (IT)
(72) Erfinder: Alber, Alfons, 39010 Vöran (IT)
(74) Vertreter: Kopf, Korbinian Paul

(57) **Zusammenfassung**

Kombinationswerkzeug mit einem scherenartigen Werkzeug (2), einem Gegen-Schneidelement (6), einem messerartigen Werkzeug (3), einem Griff (1) und einem Verriegelungselement (4). Das scherenartige Werkzeug weist einen Griffabschnitt (24), eine Schneide (20) und einen Gelenkpunkt (22) auf. Das messerartige Werkzeug weist einen Gelenkpunkt (32) und einen Schneidabschnitt (30) auf. Die einzelnen Elemente des Kombinationswerkzeugs sind derart zueinander angeordnet, dass durch die Schneide des scherenartigen Werkzeuges und das Gegen-Schneidelement ein Werkzeugende an dem Kombinationswerkzeug gebildet wird. Andererseits kann um einen Gelenkpunkt, welcher an dem entgegengesetzten Ende des Griffs angeordnet ist, ein messerartiges Werkzeug aus dem Griff herausgeschwenkt werden. In dem Griff ist das Verriegelungselement angeordnet, so dass das Verriegelungselement zwischen einer Verriegelungsposition und einer Freigabe-Position bewegbar ist, wodurch je nach Position des Verriegelungselementes die Schwenkbewegung des scherenartigen Werkzeugs und die Schwenkbewegung des messerartigen Werkzeugs blockiert oder freigegeben wird.

## Beschreibung

Die Erfindung betrifft ein Kombinationswerkzeug und insbesondere ein Kombinationswerkzeug mit einem scherenartigen und einem messerartigen Werkzeug.

Scherenartige Werkzeuge, wie zum Beispiel Scheren oder auch Zangen aller Art sind weitgehend bekannt. Diese scherenartigen Werkzeuge weisen in der Regel zwei Elemente auf, welche an einem Gelenkpunkt miteinander verbunden sind. Durch eine Schwenkbewegung der beiden Elemente relative zueinander wird eine Schneidbewegung zwischen den Schneidenden der beiden Elemente ermöglicht. Üblicherweise sind relativ zum Gelenkpunkt entgegengesetzt Schneidelemente angeordnet, die als Griffelemente ausgebildet sind. Diese Griffelemente können außerdem ergonomisch so gestaltet sein, dass ein Benutzer die Griffabschnitte bequem greifen kann und einen beabsichtigten Scherenschnitt ausführen kann.

Andererseits ist es im Stand der Technik bekannt, mehrere Werkzeuge wie zum Beispiel Messer, Feilen, Scheren, Schraubendreher und andere in einem Griff unterzubringen. Diese einzelnen Werkzeuge sind jeweils um einen Gelenkpunkt, der an einem der Enden des Griffs angeordnet ist, aus diesem Griff heraus schwenkbar.

Wenn aber aus einem Scherengriff heraus beispielsweise ein Messer heraus geschwenkt wird, besteht ein höheres Risiko der Verletzung des Anwenders, da in dieser Situation zwei Werkzeugenden in entgegengesetzter Richtung von dem Griff weg vorstehen.

Es ist eine Aufgabe der Erfindung, ein Kombinationswerkzeug zu schaffen, welches sicher zu handhaben ist. Ferner ist es eine Aufgabe der Erfindung, ein Kombinationswerkzeug zu schaffen, dessen Werkzeuge leicht gewartet und gepflegt werden können.

Diese und andere Aufgaben werden durch die Gegenstände der jeweiligen unabhängigen Ansprüche gelöst. Weitere Ausführungsformen der Erfindung sind in den abhängigen Ansprüchen beschrieben.

Im Allgemeinen weist ein Kombinationswerkzeug ein scherenartiges Werkzeug, ein Gegen-Schneidelement, ein messerartiges Werkzeug, einen Griff und ein Verriegelungselement auf. Das scherenartige Werkzeug weist einen Griffabschnitt, eine Schneide und einen Gelenkpunkt auf. Das messerartige Werkzeug weist einen Gelenkpunkt und einen Schneidabschnitt auf. Die einzelnen Elemente des Kombinationswerkzeugs sind derart zueinander angeordnet, dass durch die Schneide des scherenartigen Werkzeuges und das Gegen-Schneidelement ein Werkzeugende an dem Kombinationswerkzeug gebildet wird. Andererseits kann um einen Gelenkpunkt, welcher an dem entgegengesetzten Ende des Griffs angeordnet ist, ein messerartiges Werkzeug aus dem Griff herausgeschwenkt werden. Mit dem Griff verbunden ist das Verriegelungselement, so dass das Verriegelungselement zwischen einer Verriegelungsposition und einer Freigabe-Position bewegbar ist, wodurch je nach Position des Verriegelungselementes die Schwenkbewegung des scherenartigen Werkzeugs und die Schwenkbewegung des messerartigen Werkzeugs blockiert oder freigegeben wird.

Es wird angemerkt, dass hier die Bezeichnung "scherenartiges Werkzeug" lediglich ein Element umfasst, welches wie oben erwähnt einen Griffabschnitt, eine Schneide und einen Gelenkpunkt aufweist, wobei das Werkzeug auch aus mehreren Teilen zusammengesetzt sein kann. Der Gelenkpunkt ist zwischen der Schneide und dem Griffabschnitt angeordnet. Ein Scherenschnitt wird entsprechend erst durch die Kombination des Gegen-Schneidelementes, welches mit dem Griff verbunden ist, und der Schneide des scherenartigen Werkzeugs ermöglicht.

Die Bezeichnung "scherenartiges Werkzeug" schließt außerdem jede Art von scherenähnlichen Werkzeugen ein. Das heißt, ein scherenartiges Werkzeug kann auch eine Gartenschere, eine Astschere, eine Baumschwere, eine Haarschere, eine Papierschere, etc. sowie eine Zange inklusive einer Flachzange, einer Spitzzange, einer Beißzange oder auch ein Seitenschneider sein. Ferner ist auch ein Dosenöffner als scherenartiges Werkzeug denkbar. Es ist zu verstehen, dass die Aufzählung nicht abschließend ist.

Das Gegen-Schneidelement kann ein separates Element sein, welches an dem Griff befestigt ist, so dass es bei einer Schwenkbewegung des scherenartigen Werkzeugs einen Scherenschnitt ermöglicht. Ferner kann das Gegen-Schneidelement integral mit dem Griff ausgebildet sein.

Das messerartige Werkzeug kann jede Art von länglichem Werkzeug sein, welches an einem Ende einen Gelenkpunkt aufweist, so dass es aus einem Griff eines Kombinationswerkzeugs heraus schwenkbar ist. Insbesondere kann das messerartige Werkzeug eine Säge, ein Messer oder auch eine Feile, ein Schraubendreher oder auch ein Flaschenöffner sein.

Der Griff des Kombinationswerkzeugs zeichnet sich dadurch aus, dass er ein im Wesentlichen längliches Element ist, welches an seinen Enden jeweils einen Gelenkpunkt aufweist, so dass das scherenartige Werkzeug und das messerartige Werkzeug an dem Griff montierbar sind. Ferner weist der Griff in Längsrichtung einen Schlitz zur Aufnahme des messerartigen Werkzeugs auf. Seitlich zu dem Schlitz, auf einer oder auch auf beiden Seiten des Schlitzes, ist zumindest ein Verriegelungselement angebracht, welches je nach Position die Schwenkbewegung der beiden Werkzeuge blockieren oder freigeben kann.

Gemäß einer Ausführungsform der Erfindung ist das Verriegelungselement des Kombinationswerkzeuges in eine Freigabe-Position bewegbar, in welcher die Schwenkbewegung des messerartigen Werkzeugs freigegeben ist. Diese Anordnung ist nur möglich, wenn das scherenartige Werkzeug in einer ersten Position angeordnet ist. In dieser ersten Position stehen der Griffabschnitt und die Schneide des scherenartigen Werkzeugs im Wesentlichen senkrecht zur Längsrichtung des Griffs, das heißt, das scherenartige Werkzeug ist über eine für das Schneiden zweckmäßige Stellung hinaus geöffnet.

Gemäß einer weiteren Ausführungsform der Erfindung ist das Verriegelungselement des Kombinationswerkzeugs in der Verriegelungsposition angeordnet, in welcher die Schwenkbewegung des messerartigen Werkzeugs blockiert ist, wenn das scherenartige Werkzeug in der zweiten Position angeordnet ist. Die Bezeichnung "in der zweiten Position" des scherenartigen Werkzeugs bezeichnet sowohl einen geschlossenen Zustand des scherenartigen Werkzeugs als auch einen leicht geöffneten Zustand, das heißt, einen zum Schneiden geeigneten, geöffneten Zustand. Demnach kann das scherenartige Werkzeug in der zweiten Position geöffnet und geschlossen werden, zum Schneiden von zum Beispiel Ästen.

Gemäß einer weiteren Ausführungsform der Erfindung ist das Verriegelungselement in Richtung des scherenartigen Werkzeugs federvorgespannt, und das Verriegelungselement ist derart relativ zu dem scherenartigen Werkzeug angeordnet, dass die Schneide des scherenartigen Werkzeugs aufgrund der Federkraft von dem Gegen-Schneidelement weggedrückt wird.

Gemäß einer weiteren Ausführungsform der Erfindung ist eine Schwenkbewegung des scherenartigen Werkzeugs des Kombinationswerkzeugs von der zweiten Position in die erste Position, das heißt, die weit geöffnete Position, nur nach Überwindung eines Widerstands möglich. Dieser Widerstand kann durch ein Zusammenwirken des Verriegelungselements und des scherenartigen Werkzeugs erzeugt werden. Dies wäre zum Beispiel möglich, wenn das Verriegelungselement in Kontakt mit einem Rand des scherenartigen Werkzeugs ist und dieser Rand einen Vorsprung aufweist, über den das Verriegelungselement hinwegrutschen müsste. Andererseits kann der Widerstand auch durch ein weiteres Element in dem Griff verursacht werden. Beispielsweise kann die Achse des Gelenkes des scherenartigen Werkzeugs mit einem entsprechenden Nocken ausgebildet sein.

Nach einer weiteren Ausführungsform der Erfindung ist der Schneideabschnitt des messerartigen Werkzeugs um den Gelenkpunkt herum aus dem Griff herausschwenkbar, wobei das messerartige Werkzeug sowohl in einer aus dem Griff herausgeschwenkten Position als auch in einer in den Griff hineingeschwenkten Position verriegelbar ist.

Demnach muss, wenn das messerartige Werkzeug verwendet werden soll, zunächst das scherenartige Werkzeug in die weit geöffnete, erste Position geschwenkt werden, womit das Verriegelungselement in die Freigabe-Position verschoben wird. In dieser Freigabe-Position ist ein Herausschwenken des messerartigen Werkzeugs möglich. Durch ein Zurückschwenken des scherenartigen Werkzeugs aus der ersten Position in die zweite Position wird das Verriegelungselement wieder in die Verriegelungsposition zurückbewegt, so dass das messerartige Werkzeug in der aus dem Griff herausgeschwenkten Position arretiert ist. Auf diese Weise wird automatisch das messerartige Werkzeug gesichert. Bei einer Verwendung kann somit das messerartige Werkzeug nicht unbeabsichtigt einschwenken und die Hand eines Verwenders verletzen.

Gemäß einer weiteren Ausführungsform der Erfindung weist das Kombinationswerkzeug ferner einen Verschlussschieber auf, welcher das scherenartige Werkzeug in einer Position blockiert, in der die Schneide und das Gegen-Schneidelement geschlossen sind.

Wie oben erwähnt, kann das scherenartige Werkzeug in der zweiten Position zwischen einem geschlossenen und einem offenen Zustand geschwenkt werden. Um zu verhindern, dass das scherenartige Werkzeug offensteht, wenn das Kombinationswerkzeug verstaut wird oder einfach nicht verwendet wird, kann mit einem separaten Verschlussschieber das scherenartige Werkzeug in der geschlossenen Position arretiert werden, so dass eine Verletzungsgefahr oder auch ein unbeabsichtigtes Beschädigen von anderen Gegenständen verhindert wird. Dieser Verschlussschieber kann an einer geeigneten Stelle an dem Kombinationswerkzeug angeordnet sein.

Gemäß einer weiteren Ausführungsform der Erfindung ist das messerartige Werkzeug in Richtung des Griffabschnitts des scherenartigen Werkzeugs aus dem Griff herausschwenkbar. Das heißt, dass das messerartige Werkzeug, wenn es in den Griff hineingeschwenkt ist, zwischen dem Griff und dem Griffabschnitt des scherenartigen Werkzeugs angeordnet ist. Unter der Voraussetzung, dass die Schwenkachsen an den beiden Enden des Griffs im Wesentlichen parallel zueinander angeordnet sind, kann somit das messerartige Werkzeug nur dann aus dem Griff herausgeschwenkt werden, wenn das scherenartige Werkzeug in seiner ersten, weit geöffneten Position ist.

Gemäß einer weiteren Ausführungsform der Erfindung weist das Gegen-Schneidelement eine Schneidplatte auf, deren Oberfläche senkrecht zur Schneide steht, wobei in der Schneidplatte eine Nut vorgesehen sein kann, in welche die Schneide eintauchen kann. Diese Art von Schneidkombination, das heißt eine geschliffene Schneidkante gegenüber einer Schneidplatte ist insbesondere geeignet zum Schneiden von Pflanzenteilen wie etwa kleinen Ästen. Das Gegen-Schneidelement kann am ersten Ende des Griffs integral mit dem Griff ausgebildet sein.

Gemäß einer weiteren Ausführungsform der Erfindung kann das im Zusammenhang eines Kombinationswerkzeugs zum Bearbeiten/Schneiden von Pflanzenteilen beschriebene Verriegelungselement auch in einem Griff angeordnet sein, an welchem Werkzeuge montiert sind, wie sie beispielsweise oben aufgezählt wurden.

Die oben definierten Aspekte und weitere Aspekte, Merkmale und Vorteile der Erfindung können ebenfalls aus dem Beispiel einer Ausführungsform abgeleitet werden, welches im Folgenden beschrieben wird unter Bezugnahme auf die anhängenden Zeichnungen. Die Erfindung wird anhand eines Beispiels im Folgenden im Detail beschrieben, welches Beispiel allerdings die Erfindung nicht einschränken soll.

### Kurze Beschreibung der Zeichnung

Figur 1a zeigt eine Draufsicht auf das Kombinationswerkzeug gemäß der Erfindung.
Figur 1b ist eine isometrische Darstellung des Kombinationswerkzeugs gemäß der Erfindung.
Figur 2 zeigt das Kombinationswerkzeug in einer teilweise aufgeschnittenen Darstellung, wobei das scherenartige Werkzeug in der weit geöffneten Position angeordnet ist.
Figur 3 zeigt das Kombinationswerkzeug gemäß der Erfindung in einer teilweise aufgeschnittenen Darstellung, wobei das messerartige Werkzeug aus dem Griff herausgeschwenkt ist.
Figur 4a zeigt das Kombinationswerkzeug gemäß der Erfindung, wobei das scherenartige Werkzeug mittels eines Verschlussschiebers in der geschlossenen Position arretiert ist.
Figur 4b zeigt das Kombinationswerkzeug gemäß der Erfindung, wobei das scherenartige Werkzeug in einer leicht geöffneten Position dargestellt ist.

### Detaillierte Beschreibung einer exemplarischen Ausführungsform

Im Folgenden wird ein exemplarisches Kombinationswerk gemäß der Erfindung beschrieben. Dieses Kombinationswerkzeug ist insbesondere für eine Verwendung im Garten- und Landschaftsbau vorgesehen.

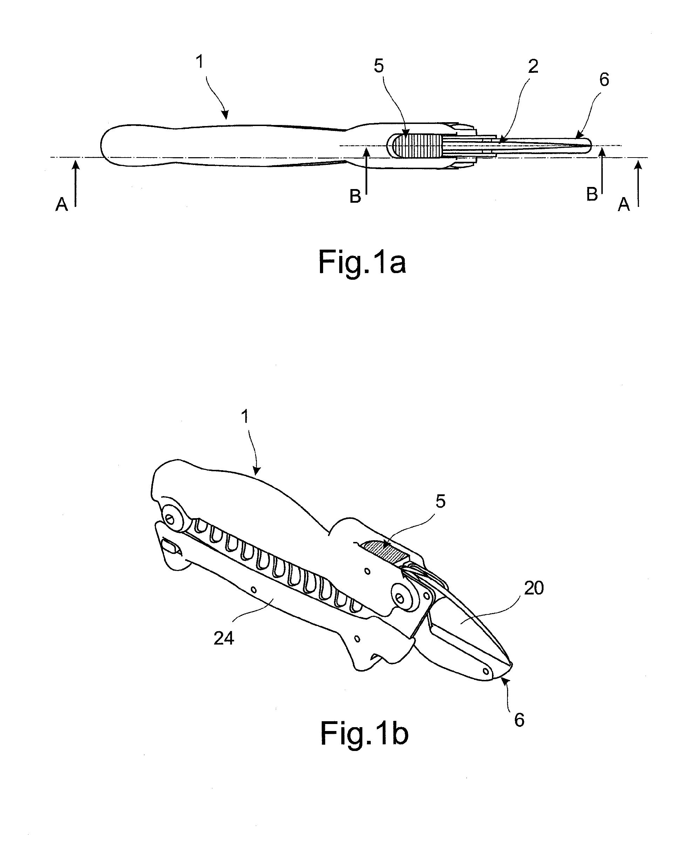

Figur 1a zeigt eine Draufsicht auf das Kombinationswerkzeug gemäß der Erfindung. Hier sind der Griff 1, das scherenartige Werkzeug 2 sowie das Gegen-Schneidelement 6 zu sehen. Ferner ist ein Verschlussschieber 5 dargestellt. Der Griff 1 weist in dieser Ansicht bauchigere und schlankere Abschnitte auf, womit ein bequemeres Greifen durch einen Verwender gewährleistet wird. Der die Oberfläche des Verschlussschiebers 5, die beispielsweise mit der Finderkuppe des Daumens berührt wird, ist in Querrichtung geriffelt, so dass ein leichteres Verschieben des Verschlussschiebers in Längsrichtung des Griffs ermöglicht wird.

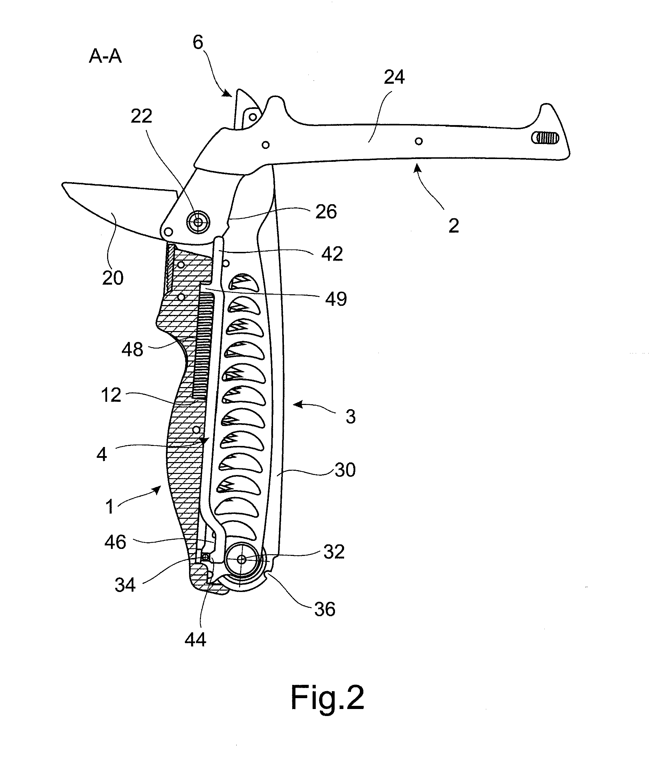

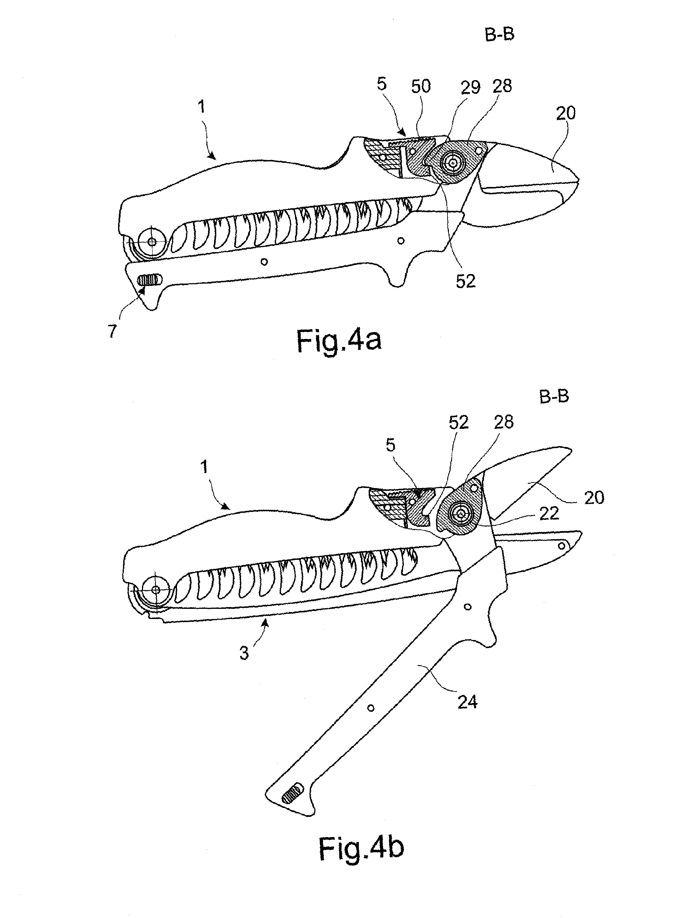

Außerdem sind in Figur 1a Schnittebenen A-A und B-B eingezeichnet, welche die seitliche Schnittposition in den Figuren 2 und 4 (siehe unten) verdeutlichen.

Figur 1b ist eine isometrische Darstellung des Kombinationswerkzeugs mit Griff 1, Schneide 20 und Griffabschnitt 24 des scherenartigen Werkzeugs, Gegen-Schneidelement 6 und Verschlussschieber 5.

Auch hier ist gut zu erkennen, dass die äußere Kontur des Griffs 1 ergonomisch ausgebildet ist. Der Griffabschnitt 24 des scherenartigen Werkzeugs ist entsprechend als Griffelement in seiner äußeren Form ergonomisch gestaltet.

Figur 2 zeigt das Kombinationswerkzeug gemäß der Erfindung, wobei das scherenartige Werkzeug in etwa senkrecht zu dem Griff steht. In dieser Darstellung ist der Griff 1 entlang der Schnittebene A-A geschnitten.

Im Einzelnen ist in Figur 2 folgendes zu erkennen: Das scherenartige Werkzeug 2 besteht aus einem Griffabschnitt 24, einer Schneide 20 und einem Gelenkpunkt 22, um welchen herum das scherenartige Werkzeug 2 schwenkbar an dem Griff 1 befestigt ist. Einerseits ist hierbei zu erkennen, dass in dieser Position die Schneide 20 sehr gut zugänglich ist, so dass sie leicht nachgeschliffen bzw. nachgeschärft werden kann. Andererseits ist zu erkennen, dass über den Griffabschnitt 24 (in Figur 2 nach oben) hinaus das Gegen-Schneidelement 6 vorsteht. Dies wird ermöglicht, indem der Griffabschnitt 24 mittig einen Schlitz aufweist, in welchen das Gegen-Schneidelement eintauchen kann, wenn das scherenartige Werkzeug in die erste, weit geöffnete Position geschwenkt wird. Schließlich ist zu erkennen, dass der gelenknahe Bereich des scherenartigen Werkzeugs einen Rand bzw. eine Außenkante 26 mit einem Vorsprung aufweist, wobei die beiden Flanken dieses Vorsprungs abgerundet sein können, so dass das vordere Ende 42 des Verriegelungselements 4, welches an der Außenkante 26 des scherenartigen Werkzeugs anliegt, über diesen Vorsprung hinweggleiten kann. Auf diese Weise wird gewährleistet, dass das scherenartige Werkzeug sowohl in der ersten Position als auch in der zweiten Position, das heißt in dem leicht geöffneten bis geschlossenen Zustand, in der Schwenkbewegung gehemmt wird. Es erfordert einen größeren Kraftaufwand, um den mit dieser Gestaltung zusammenhängenden Widerstand zu überwinden. Der Widerstand wird insbesondere auch durch die Kraft der Feder 48 bedingt, welche das Verriegelungselement 4 in Richtung des Gelenkpunkts 22, des scherenartigen Werkzeugs federvorspannt.

Das Verriegelungselement 4 weist ein vorderes Ende 42 auf, welches in Kontakt mit der Kante 26 des scherenartigen Werkzeugs ist. Ferner weist das Verriegelungselement 4 an seinem hinteren Ende eine Kurvenlinie mit einer Vertiefung 46 und einem Vorsprung 44 auf. Die Feder 48, welche zwischen einer Anlagefläche 12 des Griffs 1 und einer Auskragung 49 des Verriegelungselements 4 angeordnet ist, drängt das Verriegelungselement 4 nach vorne in Richtung des Gelenkpunkts des scherenartigen Werkzeugs. Wie zu erkennen ist, drückt das Verriegelungselement 4 seitlich versetzt zu dem Gelenkpunkt 22 gegen das scherenartige Werkzeug, so dass die Schneide 20 des scherenartigen Werkzeugs aufgrund des resultierenden Drehmoments um den Gelenkpunkt herum von dem Gegen-Schneidelement 6 weg in eine geöffnete Position gedrängt wird.

Wenn das vordere Ende 42 des Verriegelungselements 4 an der Kante 26 des scherenartigen Werkzeugs entlanggleitet, während das scherenartige Werkzeug 2 geschwenkt wird, verschiebt sich das Verriegelungselement 4 aufgrund der Kurvenlinie der Außenkante 26 in Längsrichtung des Griffs 1. Auf diese Weise kann eine federvorgespannte Kugel oder ein Stift 34, welcher federvorgespannt in Richtung des Gelenkpunkts 32 in dem Griff 1 angeordnet ist, entlang der Kurvenlinie 44, 46 des hinteren Endes des Verriegelungselements 4 entlanggleiten. Solange dieser Stift 34 in der Vertiefung 46 des Verriegelungselements 4 angeordnet ist, wird der Stift 34 in einer Aussparung 36 eingreifen, so dass eine Schwenkbewegung des messerartigen Werkzeugs 3 blockiert werden kann. Sobald das scherenartige Werkzeug 2, wie in Figur 2 dargestellt, in der weit geöffneten, ersten Position angeordnet ist, wird das Verriegelungselement 4 derart verschoben, dass der Stift 34 auf dem Vorsprung 44 des Verriegelungselements 4 angeordnet ist, womit der Stift 34 aus einer Aussparung 36 des messerartigen Werkzeugs 3 herausgehoben wird, so dass wiederum eine Schwenkbewegung des messerartigen Werkzeugs 3 um den Gelenkpunkt 32 herum möglich wird. In Figur 2 ist der Schneidabschitt 30 des messerartigen Werkzeugs in den Griff hineingeschwenkt.

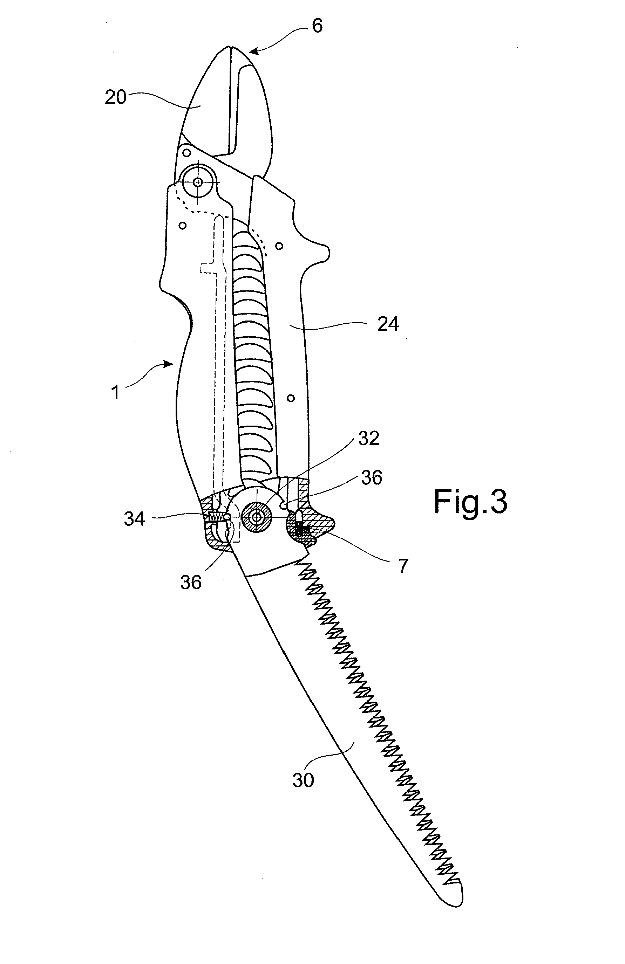

In Figur 3 ist das messerartige Werkzeug in der Position dargestellt, in welcher der Schneidabschnitt 30 aus dem Griff 1 herausgeschwenkt ist. In dieser Darstellung ist der hintere Bereich des Griffs aufgeschnitten, so dass zu erkennen ist, dass das messerartige Werkzeug in der Nähe seines Gelenkpunkts 32 zwei Aussparungen 36 aufweist, je eine für die herausgeschwenkte und die hereingeschwenkte Position des messerartigen Werkzeugs.

In Figur 3 greift der Stift 34 in eine der Aussparungen 36 ein, so dass der Schneidabschnitt 30 des messerartigen Werkzeugs, hier eine Säge, hinsichtlich seiner Schwenkbewegung blockiert ist. Dies ist die Folge des geschlossenen Zustands des scherenartigen Werkzeugs, wie in Figur 3 dargestellt. Das gestrichelt dargestellte Verriegelungselement wird durch das Schwenken des scherenartigen Werkzeugs nach hinten verschoben, so dass der federvorgespannte Stift 34 entlang der Kurvenlinie des hinteren Endes des Verriegelungselementes in die Vertiefung 46 gleitet und damit in die Aussparung 36 des messerartigen Werkzeugs eingreifen kann.

In den Figuren 4a und 4b ist die Funktionsweise des Verschlussschiebers 5 zu erkennen. Hierbei ist zu beachten, dass die aufgeschnittenen Teile in den Figuren 4a und 4b entlang der Schnittebene B-B angeordnet und geschnitten sind. Das heißt, dass das scherenartige Werkzeug in seitlicher Richtung mittig die Schneide 20 und ein Element 28 aufweist. Das Element 28 weist wiederum eine Nase 29 auf, welche mit einem Haken 52 des Verschlussschiebers 5 zusammenwirken kann. Seitlich neben dem Element 28 ist die Konturkante 26 des scherenartigen Werkzeugs angeordnet (siehe Figur 2). Der Griffabschnitt 24 ist in seiner seitlichen Ausdehnung breit genug gestaltet, so dass er die seitlich versetzten Elemente mit den Kanten 26 neben der Schneide 20 und dem Element 28 aufnehmen kann.

In Figur 4a ist das scherenartige Werkzeug in seiner geschlossenen Position, das heißt, die Schneide 20 liegt mit ihrer Schneidkante auf dem Gegen-Schneidelement, welches als Schneidplatte ausgebildet ist, auf. In dieser Position des scherenartigen Werkzeugs kann der Verschlussschieber 5 in Richtung des Gelenkpunkts 22 vorgeschoben werden, so dass ein an dem Verschlussschieber 5 ausgebildeter Haken 52 mit der Nase 29 des Elements 28 in Eingriff kommt.

In Figur 4b ist der Verschlussschieber 5 von dem Gelenkpunkt 22 weggeschoben, so dass die Nase 29 sich an dem Haken 52 vorbei bewegen kann. In dieser Stellung ist das scherenartige Werkzeug in seiner Schwenkbewegung nicht eingeschränkt und kann zum Schneiden von Pflanzenteilen verwendet werden.

Ferner ist in den Figuren am hinteren Ende des Griffabschnitts 24 des scherenartigen Werkzeugs ein weiteres Element 7 dargestellt, welches ein alternativ angeordneter Verschlussschieber sein kann. Es ist angemerkt, dass der Verschlussschieber 5 wie auch der Verschlussschieber 7 federvorgespannt sein können und korrespondierende Gestaltungen der Gegenelemente in Form des scherenartigen Werkzeugs bzw. des messerartigen Werkzeugs aufweisen, um die im Zusammenhang der Figur 4 beschriebene Funktionsweise zu gewährleisten.

Es ist zu beachten, dass es auch vorgesehen sein kann, dass die beiden Verschlussmechanismen 7, 5, 50 durch einen gemeinsamen Hebel bedient werden, zum Beispiel durch den hinteren Hebel 7. In diesem Fall kann der vordere Hebel 5 entfallen.

Auch ist zu beachten, dass eine Ausführungsform der Schere zwei Schneiden aufweist, aber keine Schneidplatte.

Während die Erfindung im Detail illustriert und beschrieben wurde, im Zusammenhang mit den Zeichnungen, sollen solche Beschreibungen nicht restriktiv, sondern lediglich illustrativ angesehen werden, und damit nicht den Umfang der Erfindung einschränken. Der Umfang der Erfindung wird durch die anhängenden Ansprüche definiert.

Weitere Variationen der offenbarten Ausführungsform können durch einen Fachmann anhand der hier vorliegenden Zeichnungen und Beschreibungen sowie der anhängenden Ansprüche ausgeführt werden. Insbesondere in den Ansprüchen schließt das Wort "aufweisend" andere Elemente nicht aus, und der unbestimmte Artikel "ein" schließt eine Mehrzahl nicht aus. Der Umstand, dass gewisse Merkmale in unterschiedlichen abhängigen Ansprüchen aufgenommen sind, soll nicht anzeigen, dass eine Kombination dieser Merkmale nicht auch vorteilhaft verwendet werden kann. Die Bezugszeichen in den Ansprüchen sollen keinen einschränkenden Charakter haben.

## Patentansprüche

1. Kombinationswerkzeug mit
einem scherenartigen Werkzeug (2), welches einen Griffabschnitt (24), eine Schneide (20) und einen Gelenkpunkt (22) aufweist,
einem Gegen-Schneidelement (6),
einem messerartigen Werkzeug (3), welches einen Gelenkpunkt (32) und einen Schneideabschnitt (30) aufweist,
einem Griff (1), welcher ein erstes Ende und ein zweites Ende aufweist, und
einem Verriegelungselement (4),
wobei das scherenartige Werkzeug (2) mit seinem Gelenkpunkt (22) derart am ersten Ende des Griffs (1) angeordnet ist, dass es zwischen einer ersten und einer zweiten Position schwenkbar ist.
wobei das Gegen-Schneidelement (6) derart an dem Griff (1) angeordnet ist, dass es mit der Schneide (20) des scherenartigen Werkzeugs (2) zusammenwirkt,
wobei das messerartige Werkzeug (3) mit seinem Gelenkpunkt (32) am zweiten Ende des Griffs (1) schwenkbar angeordnet ist, und
wobei das Verriegelungselement (4) derart mit dem Griff (1) verbunden ist, dass es zwischen einer Verriegelungsposition und einer Freigabe-Position bewegbar ist, sodass je nach Position des Verriegelungselements die Schwenkbewegung des scherenartigen Werkzeugs (2) und die Schwenkbewegung des messerartigen Werkzeugs (3) blockiert oder freigegeben wird.

2. Kombinationswerkzeug nach Anspruch 1, wobei das Verriegelungselement (4) in die Freigabe-Position bewegbar ist, in welcher die Schwenkbewegung des messerartigen Werkzeugs (3) freigegeben ist, wenn das scherenartige Werkzeug (2) in der ersten Position angeordnet ist.

3. Kombinationswerkzeug nach Anspruch 1 oder 2, wobei das Verriegelungselement (4) in der Verriegelungsposition angeordnet ist, in welcher die Schwenkbewegung des messerartigen Werkzeugs (3) blockiert ist, wenn das scherenartige Werkzeug (2) in der zweiten Position angeordnet ist.

4. Kombinationswerkzeug nach einem der Ansprüche 1 bis 3, wobei das Verriegelungselement (4) federvorgespannt in Richtung des scherenartigen Werkzeugs (2) ist und das Verriegelungselement derart relativ zu dem scherenartigen Werkzeug angeordnet ist, dass die Schneide (20) des scherenartigen Werkzeugs aufgrund der Federkraft von dem Gegen-Schneidelement (6) weg gedrückt wird.

5. Kombinationswerkzeug nach einem der Ansprüche 1 bis 4, wobei eine Schwenkbewegung des scherenartigen Werkzeugs (2) von der zweiten Position in die erste Position nur nach Überwindung eines Widerstands möglich ist, wobei der Widerstand durch ein Zusammenwirken des Verriegelungselements (4) und des scherenartigen Werkzeugs (2) erzeugt wird.

6. Kombinationswerkzeug nach einem der Ansprüche 1 bis 5, wobei der Schneideabschnitt (30) des messerartigen Werkzeugs (3) um den Gelenkpunkt (32) herum aus dem Griff (1) heraus schwenkbar ist, wobei das messerartige Werkzeug in einer aus dem Griff heraus geschwenkten Position und in einer in den Griff hinein geschwenkten Position verriegelbar ist.

7. Kombinationswerkzeug nach einem der Ansprüche 1 bis 6, welches ferner einen Verschlussschieber (7) aufweist, welcher das scherenartige Werkzeug (2) in einer Position blockiert, in der die Schneide (20) und das Gegen-Schneidelement (6) geschlossen sind.

8. Kombinationswerkzeug nach einem der Ansprüche 1 bis 7, wobei das messerartige Werkzeug (3) eine Säge ist.

9. Kombinationswerkzeug nach einem der Ansprüche 1 bis 8, wobei das messerartige Werkzeug (3) in Richtung des Griffabschnitts des scherenartigen Werkzeugs (2) aus dem Griff heraus schwenkbar ist.

10. Kombinationswerkzeug nach einem der Ansprüche 1 bis 9, wobei das Gegen-Schneidelement (6) eine Schneidplatte aufweist, dessen Oberfläche senkrecht zur Schneide (20) steht, wobei in der Schneidplatte eine Nut vorgesehen ist, in welche die Schneide eintauchen kann.

11. Kombinationswerkzeug nach einem der Ansprüche 1 bis 10, wobei das Gegen-Schneidelement (6) am ersten Ende des Griffs integral mit dem Griff (1) ausgebildet ist.

12. Kombinationswerkzeug nach einem der Ansprüche 1 bis 11, wobei ein Winkel von 90° zwischen dem Griff (1) und dem Griffabschnitt (24) des scherenartigen Werkzeugs (2) eingeschlossen wird, wenn das scherenartige Werkzeug in der ersten Position angeordnet ist.

13. Griff aufweisend ein Verriegelungselement für ein Kombinationswerkzeug nach einem der Ansprüche 1 bis 12.
